# DEMANDE DE BREVET EUROPEEN

(11) **EP 4 755 859 A1**
(43) Date de publication de la demande: **10.06.2026**
(21) Numéro de dépôt: 25219280.2
(22) Date de dépôt: 28.11.2025
(51) Int. Cl.: C03C 25/12, C03B 37/023, C03C 25/6208

(54) **TOUR DE FIBRAGE POUR LA FABRICATION D'UNE FIBRE OPTIQUE FONCTIONNALISÉE**

(30) Priorité: 03.12.2024 FR 2413386
(71) Demandeur: Commissariat à l'Energie Atomique et aux Energies Alternatives, 75015 Paris (FR); Centre National de la Recherche Scientifique, 75016 Paris Cedex 16 (FR); Université de Lille, 59800 Lille (FR)
(72) Inventeur: LAGO-RACHED, Laure, 91191 GIF-SUR-YVETTE CEDEX (FR); BOUWMANS, Géraud, 59830 CYSOING (FR); BERNARD, Rémy, 59780 BAISIEUX (FR)
(74) Mandataire: INNOV-GROUP

(57) **Abrégé**

Cette tour de fibrage comporte un support (120) de stabilisation apte à limiter l'amplitude des vibrations d'une fibre optique nue générée par un four (42) d'étirage, ce support comportant à cet effet une membrane dont la dureté, sur l'échelle A de Shore, est comprise entre 5 et 60. La membrane comporte une fente pourvue de bords aptes à frotter contre la fibre optique nue lorsque cette fibre optique nue défile à l'intérieur d'un poste (44) d'inscription de motifs. La distance verticale entre la fente et une zone (66) d'inscription de motifs dans la fibre optique nue, est inférieure à une distance Dmax au-delà de laquelle l'amplitude des vibrations de la fibre optique nue devient supérieure au diamètre du cœur de cette fibre optique nue.

## Description

L'invention concerne une tour de fibrage pour la fabrication d'une fibre optique fonctionnalisée. L'invention concerne également un support de stabilisation pour cette tour de fibrage ainsi qu'un procédé de fabrication d'une fibre optique fonctionnalisée à l'aide de cette tour de fibrage.

Une tour de fibrage pour la fabrication d'une fibre optique fonctionnalisée est décrite dans la demande CN109655962A. Cette tour de fibrage comporte, successivement en allant du haut vers le bas, notamment :
- un four d'étirage apte à générer, à partir d'une préforme, une fibre optique nue,
- un poste d'inscription de motifs dans la fibre optique nue à l'aide d'un laser femtoseconde et d'un masque de phase,
- un poste de dépôt d'un revêtement de protection sur la fibre optique nue, puis
- un dispositif d'entraînement apte à faire défiler verticalement la fibre optique dans ces différents postes.

Cette tour de fibrage présente l'avantage que l'inscription des motifs dans la fibre optique fabriquée se fait avant que le revêtement de protection soit déposé sur la fibre optique. Ceci réduit le nombre d'étapes nécessaires pour fabriquer la fibre optique fonctionnalisée. En particulier, des étapes ultérieures de retrait du revêtement de protection pour procéder à l'inscription des motifs sont évitées.

Toutefois, à l'emplacement du poste d'inscription, l'amplitude des vibrations de la fibre optique dans une direction horizontale est importante, c'est-à-dire supérieure à 5 µm ou 10 µm et, généralement supérieure à 50 µm ou 100 µm. Ainsi, la position relative de la fibre optique par rapport à l'objectif qui dirige les impulsions du laser femtoseconde sur la fibre optique, varie aussi de façon importante. Dans ces conditions, seules des méthodes basses résolutions d'inscription de motifs peuvent être mises en œuvre. Ces méthodes basses résolution ont comme point commun de ne pas nécessiter un positionnement précis de l'objectif par rapport à la fibre optique. Ces méthodes basses résolutions comportent, par exemple, les méthodes d'inscription qui utilisent un masque de phase comme dans la demande CN109655962A.

A l'inverse, dans la tour de fibrage de la demande CN109655962A, il n'est pas possible de mettre en œuvre des méthodes d'inscription nécessitant une résolution plus élevée, c'est-à-dire des méthodes dans lesquelles la position relative de la fibre optique par rapport à l'objectif varie peu. Par exemple, dans la tour de fibrage de la demande CN109655962A, il n'est pas possible de mettre en œuvre une méthode d'inscription point-à-point des motifs à l'aide d'un laser femtoseconde comme celle décrite dans la demande CN115933324A.

L'état de la technique suivant donne d'autres exemples de tours de fibrage similaires à celle de la demande CN109655962A :
- W. Gao et al. : «Multi-Wavelength Ultra-Weak Fiber Bragg Grating Arrays for Long-Distance Quasi-Distributed Sensing », Photonic Sensors 12 (2), 2022,
- H. Guo et al. : «Ultra-weak FBG and its refractive index distribution in the drawing optical fiber », Optics Express 23, 4 (2015).

La demande US20150160409A1 divulgue une tour de fibrage comportant des rouleaux pour amortir les vibrations de la fibre optique avant l'inscription de motifs dans cette fibre optique. La demande CN118393640A décrit quant à elle des pinces pour limiter les vibrations de la fibre optique dans la zone où sont inscrits les motifs.

L'invention vise à proposer une tour de fibrage qui présente les mêmes avantages que la tour de fibrage divulguée dans la demande CN109655962A tout en offrant la possibilité d'utiliser d'autres méthodes d'inscription de motifs et, en particulier, des méthodes d'inscriptions nécessitant une résolution plus élevée.

L'invention est exposée dans le jeu de revendications joint.

L'invention sera mieux comprise à la lecture de la description qui va suivre, donnée uniquement à titre d'exemple non limitatif et faite en se référant aux dessins sur lesquels :
- les figures 1 à 3 sont des illustrations schématiques et partielles, en coupe longitudinale, de trois fibres optiques correspondant à trois états de fabrication différents,
- la figure 4 est une illustration schématique d'une tour de fibrage dans laquelle apparaissent les trois états de fabrication représentés sur les figures 1 à 3 et comportant un support de stabilisation,
- la figure 5 est une illustration schématique d'un poste d'inscription de la tour de fibrage de la figure 4,
- les figures 6, 7 et 10 sont des illustrations, en perspective et selon différents points de vue, d'un boîtier du support de stabilisation de la tour de fibrage de la figure 4,
- la figure 8 est une vue de dessus du boîtier du support de stabilisation de la tour de fibrage de la figure 4,
- la figure 9 est une vue de côté du boîtier du support de stabilisation de la tour de fibrage de la figure 4,
- la figure 11 est une vue de dessus d'une membrane du support de stabilisation de la tour de fibrage de la figure 4,
- la figure 12 est une illustration, en perspective, de la membrane de la figure 11,
- la figure 13 est une illustration schématique, en coupe verticale, d'une portion inférieure du support de stabilisation de la tour de fibrage de la figure 4, et
- la figure 14 est un organigramme d'un procédé de fabrication d'une fibre optique fonctionnalisée à l'aide de la tour de fibrage de la figure 4.

Dans cette description, la terminologie, les conventions et les définitions des termes utilisés dans ce texte sont introduites dans un chapitre I. Ensuite, des exemples détaillés de modes de réalisation sont décrits dans un chapitre Il en référence aux figures. Dans un chapitre III, des variantes de ces modes de réalisation sont présentées. Enfin, les avantages des différents modes de réalisation sont précisés dans un chapitre IV.

### Chapitre I : Définitions, terminologies et conventions :

Dans les figures, les mêmes références sont utilisées pour désigner les mêmes éléments.

Dans la suite de cette description, les caractéristiques et fonctions bien connues de l'homme du métier ne sont pas décrites en détails.

Les figures sont orientées par rapport à un repère orthogonal XYZ, où les directions X et Y sont horizontales et la direction Z est verticale. Les termes tels que « au-dessus », « au-dessous », « haut », « bas », « supérieur », « inférieur » sont définis par rapport à la direction Z.

Le symbole « * » désigne la multiplication scalaire.

L'expression « un élément réalisé en un matériau A » ou l'expression « un élément en matériau A » signifie que le matériau A représente 90 % ou 95 % de la masse de cet élément.

Une fibre optique comporte au moins une portion capable de guider un signal optique le long de son axe longitudinal. Cette portion est formée d'au moins un cœur (« core » en anglais) et d'une gaine optique (« cladding » en anglais) qui recouvre l'au moins un cœur. L'indice de réfraction de la gaine optique est adapté pour que le signal optique soit confiné à l'intérieur du cœur et puisse s'y propager longitudinalement avec des pertes limitées. Par la suite, cette portion de la fibre optique dont la fonction est de guider le signal optique est appelée « fibre optique nue ». Ainsi, cette fibre optique nue comporte l'au moins un cœur et la gaine optique de la fibre optique. Par contre, la fibre optique nue ne comporte pas le revêtement de protection qui recouvre la gaine optique pour protéger la fibre optique nue.

Le terme « fibre optique revêtue » désigne la fibre optique nue revêtue de son revêtement de protection.

Le terme « fibre optique » seul est utilisé lorsqu'il ressort sans ambiguïté du contexte dans lequel il est employé s'il s'agit de la fibre optique nue ou de la fibre optique revêtue.

Le revêtement de protection forme l'enveloppe extérieure d'une fibre optique revêtue. Ce revêtement a pour fonction de conférer à cette fibre optique des propriétés mécaniques qui permettent de la manipuler et de l'utiliser sans l'endommager. En particulier, le revêtement de protection permet de protéger la fibre optique nue :
- des rayures à la surface de la gaine optique et qui forment des amorces de rupture ; et
- des agressions chimiques environnementales tels que les gaz ou les liquides pouvant entraîner :
   a) des amorces de ruptures par oxydation de la surface de la gaine optique,
   b) une dégradation des qualités optiques de la fibre optique nue par l'absorption spectrale de composés diffusant à l'intérieur de la fibre optique nue.

Une fibre optique, nue ou revêtue, est dite « fonctionnalisée » lorsqu'elle comporte un réseau de motifs inscrits dans son cœur et/ou sa gaine optique.

Un « motif » est une brusque variation de l'indice de réfraction créée dans le cœur et/ou la gaine optique à l'aide d'une impulsion laser.

Dans ce texte, la distance Df est la distance, mesurée horizontalement, entre l'axe longitudinal de la fibre optique nue et l'extrémité de l'objectif qui dirige le faisceau laser vers une zone d'inscription.

Une zone d'inscription est la zone au niveau de laquelle un motif ou un ensemble de plusieurs motifs est généré dans la fibre optique nue lorsque cette fibre optique nue traverse cette zone d'inscription à un moment où une impulsion laser est émise à travers l'objectif.

Une zone d'inspection est la zone au niveau de laquelle une caractéristique dimensionnelle de la fibre optique nue est mesurée.

Dans ce texte, une méthode d'inscription « haute résolution » désigne une méthode d'inscription de motifs dans la fibre optique nue qui nécessite que, lors de la mise en œuvre de cette méthode, les variations de la distance Df restent inférieures au diamètre du cœur de la fibre optique nue.

A l'inverse, une méthode d'inscription « basse résolution » est une méthode d'inscription de motifs dans la fibre optique nue qui ne nécessite pas que, lors de la mise en œuvre de cette méthode, les variations de la distance Df restent inférieures au diamètre du cœur de la fibre optique nue.

### Chapitre Il : Exemple de mode de réalisation

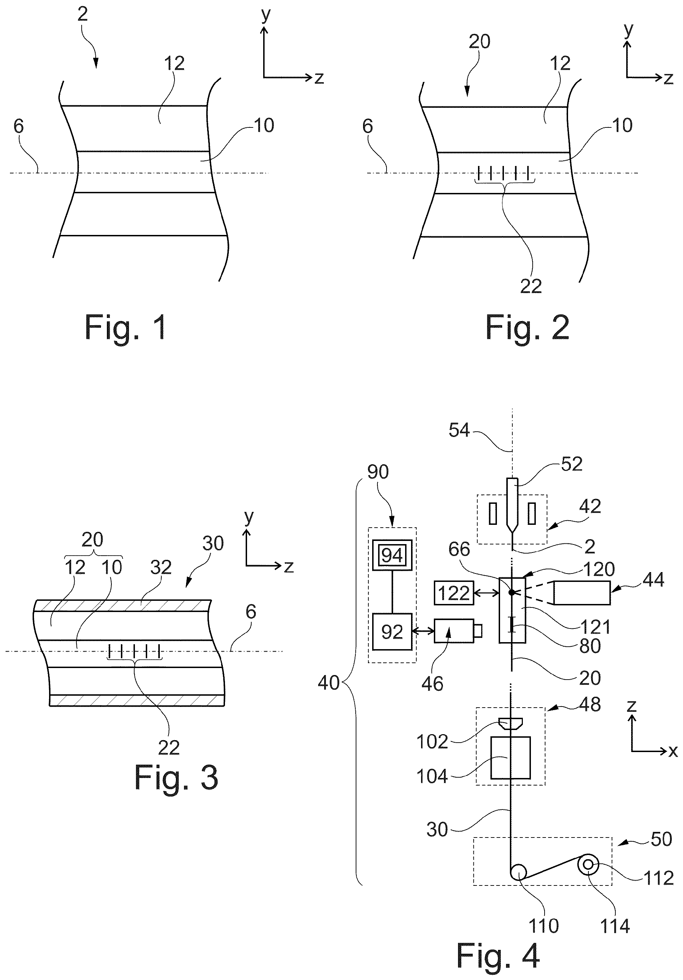

La figure 1 représente une portion d'une fibre optique nue non-fonctionnalisée 2. La fibre 2 est, par exemple, une fibre optique monomode ou SMF (« Single Mode Fiber ») capable de guider un signal optique sur de très grandes distances, c'est-à-dire sur des distances supérieures à un kilomètre. Le signal optique est guidé le long d'un axe longitudinal 6 de la fibre 2. La longueur d'onde du signal optique guidé est typiquement dans le domaine de la lumière visible, c'est-à-dire entre 380 nm et 780 nm, ou dans le domaine du proche infrarouge, c'est-à-dire entre 780 nm et 2000 nm ou dans l'infrarouge lointain, c'est-à-dire entre 2 µm et 22 µm.

La fibre 2 comporte par exemple un seul cœur 10, à l'intérieur duquel se propage le signal optique, et une gaine optique 12 qui recouvre ce cœur 10. La fibre 2 est par exemple réalisée en silice. Dans ce cas, l'un du cœur 10 et la gaine optique 12 est dopé pour obtenir l'indice de réfraction souhaité différent de l'indice de réfraction de l'autre du cœur 10 et de la gaine optique 12. Par exemple, le cœur 10 est réalisé en silice dopée au germanium et la gaine optique 12 est alors réalisée en silice pure non-dopée.

La fibre 2 est dépourvue de revêtement de protection. La fibre 2 est non-fonctionnalisée, c'est-à-dire que le cœur 10 et la gaine 12 ne comportent aucun motif inscrit à l'aide d'une impulsion laser. Ainsi, le cœur 10 ne comporte aucun défaut volontairement créé dans ce cœur pour réfléchir une partie du signal optique qui se propage à l'intérieur de ce cœur 10.

Dans cet exemple de réalisation, le diamètre extérieur D₁₂ de la fibre 2 est égal à 125 µm et le diamètre D₁₀ du cœur 10 est égal à 10 µm.

La figure 2 représente une fibre optique nue fonctionnalisée 20. Cette fibre 20 est identique à la fibre 2 sauf que des motifs 22 sont inscrits dans son cœur 10 pour la fonctionnaliser.

Dans cet exemple de réalisation, les motifs 22 sont inscrits à l'aide d'impulsions laser d'un laser femtoseconde. Un tel motif correspond à une brusque variation de l'indice de réfraction dans le cœur 10. Dans cet exemple, un motif inscrit à l'aide d'un laser femtoseconde est constitué d'une bulle. La bulle apparaît au niveau du point focal sur lequel l'impulsion laser est focalisée. Chaque bulle crée une variation importante de l'indice de réfraction du cœur 10 dans la direction de propagation du signal optique. Pour cela, l'écart entre l'indice nᵣ₁₀ de réfraction du cœur 10 et l'indice n_{rB} de réfraction d'une bulle est supérieur à 0,3 ou à 0,4. Ici, l'intérieur de chaque bulle est vide ou pratiquement vide ce qui correspond à un écart entre les indices nᵣ₁₀ et n_{rB} supérieur ou égal à 0,4.

De plus, pour que la variation d'indice de réfraction soit brusque, le diamètre de chaque bulle est inférieur à 2 µm ou à 500 nm et, de préférence, inférieur à 100 nm. Généralement, le diamètre de chaque bulle est également supérieur à 10 nm ou 50 nm. Chaque bulle est principalement sphérique. Ainsi, dans ce texte, le diamètre d'une bulle est égal au diamètre de la sphère de plus petit volume qui contient entièrement cette bulle. Ici, ce diamètre est inférieur à 100 nm.

Il est souligné qu'actuellement seules des impulsions lasers, typiquement femtosecondes, générant des effets non linéaires dans la fibre optique, permettent d'obtenir un motif 22 ayant les caractéristiques ci-dessus. Ainsi, par observation des caractéristiques dimensionnelles du motif 22 il est possible de savoir que celui-ci a été créé à l'aide d'une impulsion laser d'un laser femtoseconde.

Dans ce mode de réalisation, les motifs 22 sont regroupés en plusieurs ensembles distincts de motifs 22 et les motifs 22 de chaque ensemble sont agencés les uns par rapport autres pour former un réseau de Bragg. Typiquement un réseau de Bragg est formé d'au moins trois et, de préférence, d'au moins dix motifs 22. Ainsi, la fibre 20 comporte une succession de réseaux de Bragg disposés les uns derrières les autres le long de l'axe 6.

Le pas Λ entre deux motifs 22 immédiatement consécutifs le long de l'axe d'un même réseau de Bragg est constant et choisi pour placer la longueur d'onde à laquelle ce réseau de Bragg réfléchit le signal optique incident à la valeur souhaitée.

La figure 3 représente une fibre optique revêtue fonctionnalisée 30 identique à la fibre 20 sauf qu'elle comporte en plus un revêtement 32 de protection qui enveloppe toute la gaine 12. Le matériau dans lequel est réalisé le revêtement 32 peut être quelconque à partir du moment où il convient pour que le revêtement 32 remplisse sa fonction de protection de la fibre optique nue 20. Dans ces conditions, le matériau du revêtement 32 est choisi en fonction du domaine d'utilisation de la fibre 30. Par exemple, le revêtement 32 est réalisé dans l'un des matériaux suivants : en polymère, en métal, en céramique ou en carbone. Par la suite, la description est faite dans le cas particulier où le revêtement 32 est réalisé en polymère.

La figure 4 représente une tour 40 de fibrage utilisée pour fabriquer la fibre 30. Cette tour 40 est similaire aux tours de fibrage connues pour la fabrication de fibres optiques non-fonctionnalisées dans lesquelles le fibre optique nue est en silice. Ainsi, seuls les éléments nécessaires à la compréhension de l'invention sont représentés sur la figure 4 et décrits par la suite. En particulier, sur la figure 4 l'absence de représentation de certains postes de fabrication est représentée par des traits pointillés.

La tour 40 comporte successivement en allant du haut vers le bas notamment les postes de fabrication suivants :
- un four 42 d'étirage,
- un poste 44 d'inscription de motifs,
- un poste 46 de mesure,
- un poste 48 de dépôt du revêtement 32, et
- un dispositif 50 d'entraînement.

Le four 42 fait fondre une préforme 52 en silice pour générer la fibre 2 en silice qui traverse ensuite les différents postes de fabrication jusqu'à obtenir la fibre 30. Ici la fibre traverse les différents postes de fabrication en suivant un axe vertical 54 de défilement. La fibre traverse les différents postes de fabrication à une vitesse de production vₚ. La vitesse vₚ est typiquement supérieure à 50 mm/s et inférieure à 1500 mm/s. Par exemple, la vitesse vₚ est souvent égale ou proche de 250 mm/s et, de préférence, même supérieure à 120 mm/s.

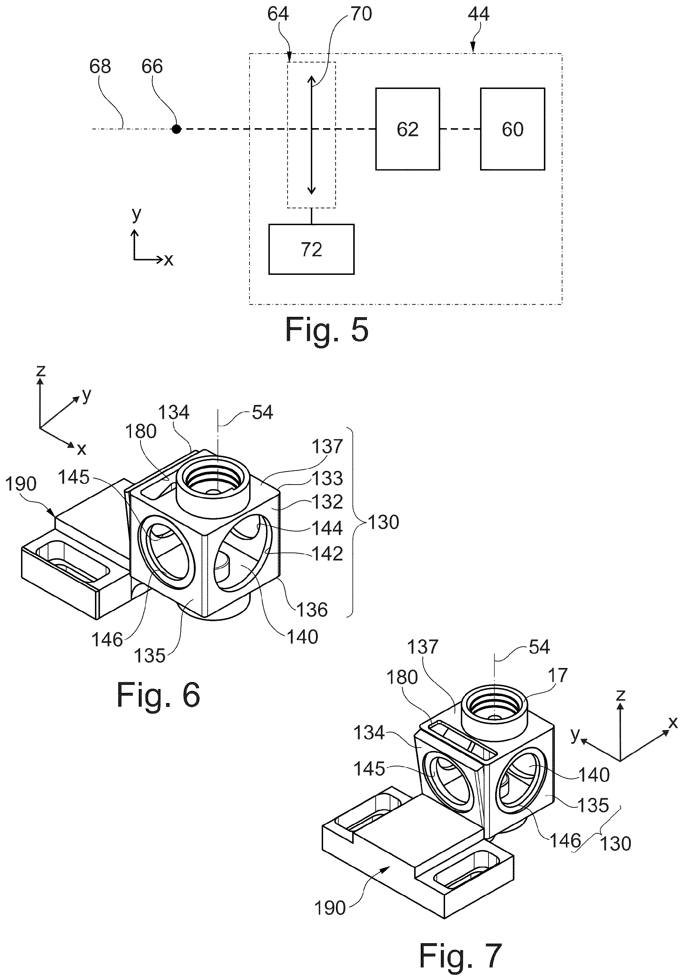

Le poste 44 inscrit les motifs 22 dans le cœur 10 de la fibre 2 à l'aide d'un faisceau laser de sorte qu'en sortie du poste 44 la fibre 20 est obtenue. Pour cela, dans ce mode de réalisation, le poste 44 implémente une méthode d'inscription haute résolution et, plus précisément, une méthode d'inscription point-à-point. A cet effet, comme représenté sur la figure 5, le poste 44 d'inscription comportant une source laser 60, un stabilisateur 62 et un objectif 64.

La source laser 60 est ici un laser femtoseconde apte à émettre des impulsions lasers dont les durées sont comprises, généralement, entre 5 fs et 300 fs.

L'objectif 64 dirige les impulsions laser émises sur une zone 66 d'inscription située à l'intersection de l'axe 54 et de l'axe optique 68 de cet objectif 64. Ici l'objectif 64 focalise l'impulsion laser sur cette zone 66 de sorte que la zone 66 correspond au point de focalisation du faisceau laser. A cet effet, l'objectif 64 comporte typiquement au moins une lentille convergente 70. Ainsi, lorsque la zone 66 est traversée par le cœur 10 de la fibre 2 à un moment où une impulsion laser est émise, cela crée dans le cœur 10 un des motifs 22. Puisque la fibre 2 défile à travers la zone 66, le poste 44 inscrit, dans le cœur 10, les motifs 22 les uns après les autres en utilisant une succession temporelle d'impulsions laser. La fréquence des impulsions laser est réglée en tenant compte de la vitesse vₚ pour obtenir la distance souhaitée entre deux motifs 22 immédiatement consécutifs d'un même réseau de Bragg. A l'inverse, lorsque aucun réseau de Bragg ne doit être inscrit dans le cœur 10 de la fibre 2 qui défile à travers la zone 66, la génération des impulsions laser est inhibée.

Le stabilisateur 62 stabilise le faisceau laser émis par la source 60 pour que celui-ci soit toujours correctement centré sur la lentille 70. A cet effet, il comporte :
- un ou plusieurs capteurs qui mesurent un écart entre la position actuelle du faisceau laser et une consigne de position,
- un ou plusieurs actionneurs aptes à modifier la direction du faisceau laser, et
- un microprocesseur programmé pour commander le ou les actionneurs de manière à réduire les écarts mesurés.

Le poste d'inscription comporte aussi une platine 72 qui permet d'ajuster la position de la zone 66 dans un plan horizontal. A cet effet, ici, l'objectif 64 est fixé, sans aucun degré de liberté, sur cette platine 72. La platine 72 permet de déplacer l'objectif 64 et donc la zone 66 avec une précision inférieure au diamètre D₁₀ et, de préférence, avec une précision inférieure à D₁₀/2 ou D₁₀/5. Ici, la précision de la platine 72 est inférieure à 1 µm. La platine 72 peut être actionnée manuellement ou électriquement. Ici, la platine 72 est utilisée pour placer la zone 66 à l'intersection des axes 54 et 68.

Le poste 46 de mesure permet de mesurer une caractéristique dimensionnelle de la fibre 20 obtenue après inscription d'un motif 22. Ici, la caractéristique dimensionnelle est une distance horizontale entre les motifs 22 et la limite entre le cœur 10 et la gaine 12. Par exemple, à cet effet, le poste 46 comporte au moins une caméra et un module de traitement d'images. La caméra filme la portion de la fibre 20 située au niveau d'une zone 80 d'inspection. Les images filmées sont ensuite traitées, au fur et à mesure de leur acquisition, par le module de traitement pour en extraire la distance entre les motifs 22 et la limite entre le cœur 10 et la gaine 12.

La mesure réalisée par le poste 46 peut être exploitée à différentes fins. Par exemple, ici, la tour 40 comporte une unité électronique 90 de commande qui comporte un module 92 de surveillance et une interface homme-machine 94. Le module 92 acquière, au fur et à mesure, les distances mesurées par le poste 46 et les compare à des seuils pré-enregistrés. Dès qu'un de ces seuils pré-enregistrés est franchi par la distance mesurée, le module 92 commande l'interface homme-machine 94 afin de signaler un défaut de fabrication. Ainsi, dans ce mode de réalisation, le module 92 permet de signaler automatiquement un défaut de positionnement des motifs 22 par rapport à l'axe longitudinal 6.

Le poste 48 comporte :
- un applicateur 102 pour déposer le revêtement 32 sur la fibre 20, et
- un dispositif 104 pour fixer le revêtement 32 déposé sur la fibre 20.

Ainsi, en sortie du poste 48, la fibre 30 est obtenue.

Le dispositif 50 d'entraînement fait défiler verticalement la fibre le long de l'axe 54. A cet effet, il comporte ici un cabestan 110 qui tire la fibre 30. De plus, il comporte un enrouleur 112 qui enroule la fibre 30 sur une bobine 114. Une fois la fabrication de la fibre 30 terminée, celle-ci est entièrement enroulée sur la bobine 114. La bobine 114 peut alors être retirée de l'enrouleur 112 pour l'entreposer en attendant qu'elle soit utilisée lors d'une phase suivante pour fabriquer des capteurs fibrés.

La distance verticale entre le four 42 et le poste 48 de dépôt est supérieure à plusieurs mètres et, généralement, supérieure à quatre ou cinq mètres. Ainsi, si rien n'est fait, la fibre pend librement entre le four 42 et le poste 48. Dès lors, lors de son défilement entre le four 42 et le poste 48, la fibre vibre et l'amplitude de ces vibrations est importante, c'est-à-dire supérieure au diamètre D₁₀. De telles vibrations font varier la distance entre l'objectif 64 et la fibre 2 de sorte que le cœur 10 peut être situé entièrement à côté de la zone 66 d'inscription. Dans ce cas, les motifs 22 ne sont pas inscrits dans le cœur 10 ou ne sont pas inscrits dans la fibre 2 si la fibre 2 est entièrement située en dehors de la zone 66.

Pour remédier à ce problème, la tour 40 comporte aussi un support 120 de stabilisation et une platine 122 d'ajustement de la position du support 120.

Le support 120 est apte à limiter l'amplitude des vibrations de la fibre 2 au niveau de la zone 66. Ici, ce support 120 permet en plus de limiter l'amplitude des vibrations de la fibre 20 au niveau de la zone 80 d'inspection.

La platine 122 permet d'ajuster la position du support 120 dans les directions X et Y. A cet effet, le support 120 est fixé, sans aucun degré de liberté, sur cette platine 122. La platine 122 permet de déplacer le support 120 avec une précision inférieure à 100 µm et, de préférence, avec une précision inférieure à 10 µm ou 1 µm. La platine 122 peut être actionnée manuellement ou électriquement. Ici, la platine 122 est utilisée pour positionner correctement le support 120 par rapport à l'axe 54 de défilement.

Le support 120 va maintenant être décrit plus en détail en référence aux figures 6 à 13 dans le cas où le support 120 est en plus apte à contenir un liquide d'indice 121 (Fig. 4).

Le liquide 121 est choisi pour avoir un indice de réfraction proche de celui de la gaine 12 et être transparent aux impulsions du laser femtoseconde. Le liquide 121 permet de minimiser les différences d'indice à l'interface entre le liquide d'indice et la gaine 12, réduisant ainsi la réfraction non désirée et les aberrations optiques. Typiquement, l'indice de réfraction du liquide 121 est compris entre 0,88*r₁₂ et 1,1*r₁₂, où r₁₂ est l'indice de réfraction de la gaine 12. Par exemple, le liquide 121 peut être de l'eau, un mélange d'eau et d'éthanol, un alcool ou une huile comme une huile de silicone.

Le support 120 comporte un boîtier 130. Le boîtier 130 est un parallélépipède creux. Il comporte quatre parois latérales 132 à 135, une paroi inférieure 136 et une paroi supérieure 137 qui délimitent une cavité intérieure 140.

La cavité 140 est destinée à contenir le liquide 121. La zone 66 est située à l'intérieur de la cavité 140 lorsque le support 120 est monté sur la tour 40 de fibrage. Ici, la zone 66 est située au milieu de la cavité 140.

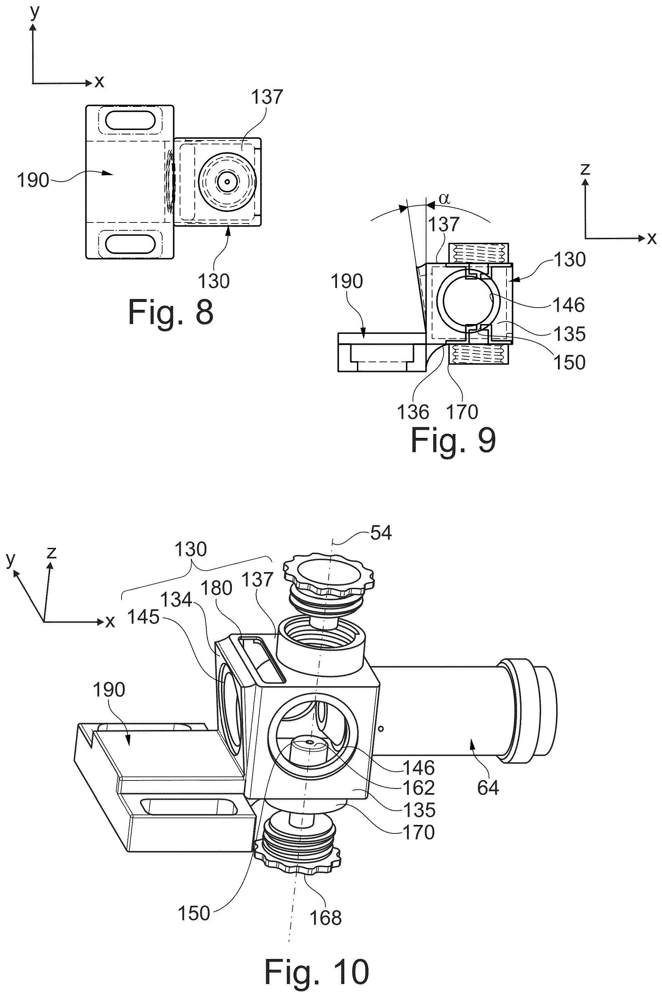

Les parois latérales 132, 133 et 135 s'étendent chacune principalement dans des plans verticaux respectifs. La paroi latérale 134 est inclinée et s'étend donc principalement dans un plan incliné qui fait un angle α (Fig. 9) avec la verticale. L'angle α est choisi pour que les impulsions laser qui atteignent cette paroi 134 soient réfléchies ailleurs que dans la zone 66. A cet effet, l'angle α est supérieur à 1° et inférieur à 60°. De préférence, l'angle α est compris entre 5° et 25° ou entre 5° et 10°. Ici, l'angle α est égal à 8°. Les parois 136 et 137 s'étendent chacune dans un plan horizontal respectif. Ici, les parois 132 à 137 sont des parois principalement carrées.

Les parois 132 à 137 sont réalisées dans un matériau rigide. Par exemple, elles sont réalisées en polymère thermoplastique comme l'ABS (acrylonitrile butadiène styrène) ou en métal comme de l'acier ou de l'aluminium.

La paroi 132 comporte une ouverture latérale 142 pour introduire, à l'intérieur de la cavité 140, le faisceau laser dirigé sur la zone 66. A cet effet, dans ce mode de réalisation, comme représenté sur la figure 10, l'extrémité de l'objectif 64 est reçue à l'intérieur de cette ouverture 142. De plus, un joint, non représenté, assure l'étanchéité au liquide 121 entre l'objectif 64 et la paroi 132 tout en autorisant un déplacement, par la platine 72, de l'objectif 64.

Dans un mode de réalisation préféré, la zone 80 d'inspection est située à l'intérieur de la cavité 140. Ici, la zone 80 est située juste en dessous de la zone 66 d'inscription. Dans ce cas, pour permettre l'observation de la fibre 20 et de ses motifs 22 depuis l'extérieur du boîtier 130, les parois 133 à 135 comportent des fenêtres d'observation, respectivement, 144 à 146. Ici, chacune de ces fenêtres 144 à 146 est circulaire et centrée sur un axe qui passe par le centre de la cavité 140. Chacune de ces fenêtres est obturée par une vitre transparente à la lumière visible de manière à assurer l'étanchéité du boîtier 130 au liquide 121 tout en permettant l'observation de la fibre qui traverse la cavité 140 depuis l'extérieur du boîtier 130 à l'aide de la ou des caméras du poste 46 de mesure. Avantageusement, ces fenêtres 144 à 146 permettent aussi une observation à l'œil nu de la fibre qui traverse la cavité 140. Par exemple, le diamètre de ces fenêtres 144 à 146 est égal à 20 mm.

La paroi inférieure 136 comporte un trou inférieur traversant 150 (Fig. 9, 10 et 13) centré sur l'axe 54 de défilement. Le trou 150 permet à la fibre, qui est entrée à l'intérieur de la cavité 140, d'en ressortir. Le trou 150 débouche d'un côté à l'intérieur de la cavité 140 et, du côté opposé, à l'extérieur du boîtier 130. Typiquement, la section transversale du trou 150 est circulaire et son diamètre est compris entre 1 mm et 5 mm. Ici, le diamètre du trou 150 est égal à 2 mm.

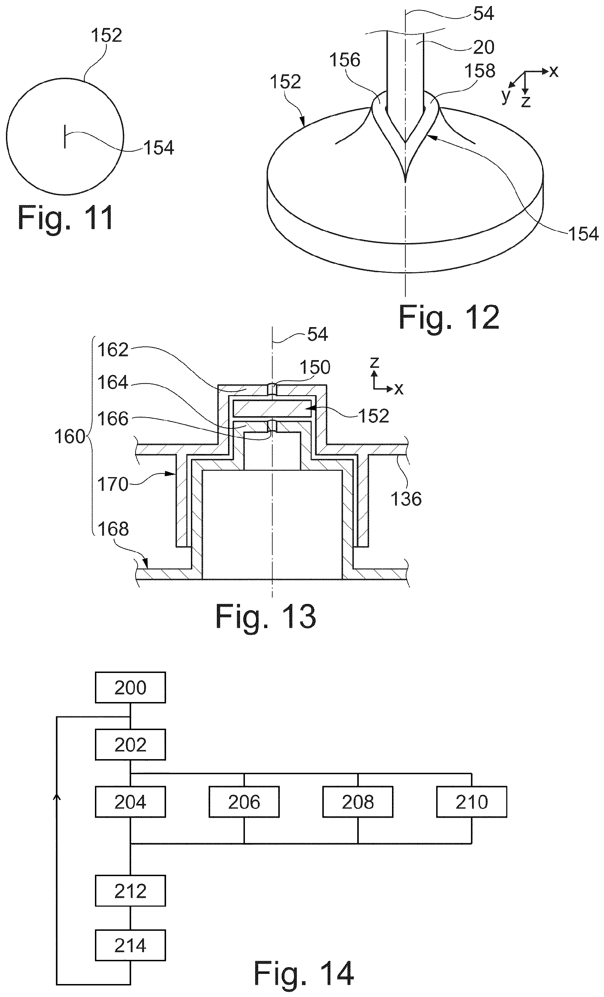

Le trou 150 est obturé par une membrane inférieure 152 (Fig. 11 et 12) fixée, sans aucun degré de liberté, sur la paroi 136. Cette membrane 152 autorise le passage de la fibre 20 tout en limitant l'amplitude de ses vibrations et en assurant l'étanchéité de la cavité 140 au liquide 121. A cet effet, la membrane 152 comporte une fente 154 (Fig. 11 et 12) centrée sur l'axe 54 de défilement. La longueur de la fente 154 est au moins deux ou trois fois supérieure au diamètre D₁₂ et, de préférence, cinq ou sept fois supérieure au diamètre D₁₂. La longueur de cette fente 154 est également inférieure au diamètre du trou 150 de sorte qu'elle ne touche pas les bords du trou 150 lorsqu'elle est fixée sur la paroi 136. Par exemple, ici, la longueur de la fente 154 est égale à 1 mm. Cette fente 154 comporte deux bords 156, 158 (Fig. 12) qui frottent ensemble sur la fibre 20 lorsque la fibre 20 défile à travers cette fente 154. Sur la figure 12, la déformation de la fente 154 lorsqu'elle est traversée par la fibre 20 a été représentée schématiquement et exagérée. En absence de la fibre 20, les bords 156 et 158 sont jointifs et s'étendent dans le plan de la membrane 152.

Pour que le frottement des bords 156 et 158 sur la fibre 20 soit doux et n'endommage pas ou peu la fibre 20, la membrane 152 est réalisée dans un matériau dont la dureté, sur l'échelle A de Shore, est comprise entre 5 et 60 et, de préférence, comprise entre 5 et 50 ou entre 10 et 30 sur l'échelle A de Shore. Le matériau de la membrane 152 est élastiquement déformable de sorte que le contact entre les bords 156, 158 et la fibre 20 est maintenu même si le diamètre de la fibre 20 varie légèrement au cours de la fabrication de la fibre 30. Typiquement, la membrane 152 est réalisée en élastomère et, de préférence, réalisée dans l'un des matériaux suivants ou dans un mélange de ces matériaux : caoutchouc, silicone, Néoprène et Polyuréthane. Par exemple, ici, la membrane 152 est principalement réalisée en caoutchouc naturel éventuellement avec une charge de silicone et sa dureté sur l'échelle A de Shore est comprise entre 8 et 15.

Toujours pour limiter les dégradations de la fibre 20, l'épaisseur de la membrane 152 est comprise entre 0,5 mm et 3 mm. Par exemple, ici, l'épaisseur de la membrane 152 est égale à 1,5 mm ou 2 mm.

De préférence, la paroi 136 comporte un mécanisme inférieur 160 (Fig. 13) de fixation de la membrane 152 sur la paroi 136 qui permet un remplacement simple de cette membrane 152 par une nouvelle membrane 152. Ce mécanisme 160 comporte un jeu de deux mâchoires 162 et 164 (Fig. 13) déplaçables l'une par rapport à l'autre de façon réversible entre un état pincé, représenté sur la figure 13, et un état relâché. Dans l'état pincé, les mâchoires 162, 164 pincent la périphérie de la membrane 152 pour la fixer sur la paroi 136. Dans l'état relâché, les mâchoires 162, 164 autorisent le remplacement de la membrane 152 par une nouvelle membrane 152. Ici, la mâchoire 162 est constituée par une portion périphérique de la paroi 136 qui entoure le trou 150. Par exemple, dans ce mode de réalisation, cette portion périphérique à la forme d'un disque centré sur l'axe 54 et percé en son centre par le trou 150. Le diamètre de ce disque est égal au diamètre de la membrane 152 auquel est ajouté un jeu suffisant pour retirer la membrane 152. La mâchoire 164 est aussi un disque centré sur l'axe 54 et dont le centre est percé par un trou 166. Le diamètre du trou 166 est compris entre 1 mm et 5 mm et, de préférence, égal au diamètre du trou 150.

Le mécanisme 160 est déplacé entre ses états pincé et relâché à l'aide d'une vis 168 et d'un goulot taraudé 170. Le goulot 170 est centré sur l'axe 54 et comporte un taraudage intérieur. Le goulot 170 et la paroi 136 ne forme qu'un seul bloc de matière. L'extrémité supérieure de la vis 168 comporte le disque qui forme la mâchoire 164. La vis 168 est traversée de part-en-part par la fibre 20 dans l'état pincé du mécanisme 160. La vis 168 comporte un filetage qui vient s'engager dans le filetage taraudé dans le goulot 170. Ainsi, lorsque la vis 168 est vissée à l'intérieur du goulot 170, cela déplace la mâchoire 162 jusqu'à ce qu'elle vienne comprimer, et donc pincer, la périphérie de la membrane 152 contre la mâchoire 162. A l'inverse, lorsque la vis 168 est dévissée, la mâchoire 164 s'éloigne de la mâchoire 162 et la vis 168 est retirée du goulot 170. Lorsque la vis 168 est retirée du goulot 170, la membrane 152 peut être retirée et remplacée par une nouvelle membrane 152.

Ici, la paroi supérieure 137 est le symétrique de la paroi inférieure 136 par rapport à un plan horizontal passant par le centre de la cavité 140 sauf qu'elle comporte en plus un orifice 180 pour introduire le liquide 121 à l'intérieur de la cavité 140. En particulier, la paroi supérieure 137 comporte un trou supérieur et un mécanisme supérieur de fixation identiques à ceux décrits dans le cas de la paroi 136. Le mécanisme supérieur de fixation est utilisé pour fixer une membrane supérieure sur la paroi 137 identique à la membrane 152. En particulier, la membrane supérieure comporte une fente supérieure. Ainsi, les membranes fixées sur les parois 136 et 137 sont les symétriques l'une de l'autre par rapport au plan horizontal passant par le centre de la cavité 140. Dès lors, tout ce qui est décrit dans le cas particulier de la membrane 152 s'applique aussi à la membrane supérieure.

Les dimensions des parois latérales 132 à 135 sont ajustées pour que la distance verticale entre la fente 154 et la zone 66 d'inscription soit inférieure à une distance Dmax. La distance Dmax est la distance au-delà de laquelle l'amplitude des vibrations de la fibre 20 devient supérieure au diamètre D₁₀. Il a été observé que l'amplitude des vibrations de la fibre sont très petites, c'est-à-dire typiquement inférieure à 1 µm ou 100 nm à proximité de la fente 154 puis l'amplitude de ces vibrations augmente au fur et à mesure que l'on s'éloigne, vers le bas, de la fente 154. Dans le mode de réalisation décrit ici, il a été observé que la distance Dmax est d'environ 30 cm. Ici, pour minimiser l'amplitude des vibrations au niveau de la zone 66 d'inscription, les dimensions des parois latérales 132 à 135 sont choisies pour que la distance entre la fente 154 et la zone 66 d'inscription soit comprise entre 0,5 cm et 5 cm. Dans ce mode de réalisation, les longueurs de chacun des côtés des parois 132 à 135 sont toutes égales à 35 mm de sorte que la distance entre la fente 154 et la zone 66 est égale à 9 mm.

Dans ce mode de réalisation, puisque la zone 80 d'inspection est située entre la zone 66 et la fente 154, l'amplitude des vibrations de la fibre 20 au niveau de la zone 80 d'inspection est aussi très faible ce qui simplifie la mesure de la caractéristique dimensionnelle.

Dans ce mode de réalisation, le support 120 comporte un socle 190 sur lequel le boîtier 130 est fixé sans aucun degré de liberté. Ce socle 190 s'étend horizontalement au-delà de l'une des faces latérales du côté opposé à l'axe 54 de défilement. Ici, le socle 190 s'étend au-delà de la face 134 dans une direction parallèle à la direction X. Le socle 190 comporte des trouées permettant de le fixer sans aucun degré de liberté, typiquement à l'aide de vis, sur la platine 122.

Le procédé de fabrication de la fibre 30 va maintenant être décrit en référence à la figure 14.

Lors d'une étape 200 d'initialisation, le four 42 génère, à partir de la préforme 52, une portion initiale de fibre 2 qui est ensuite enfilée à travers les fentes du support 120, puis à travers le poste 48 et enfin enroulée autour du cabestan 110 et de la bobine 114. Lors de cette étape d'initialisation, la portion initiale de la fibre 2 est par exemple enfilée à travers les fentes du support 120 à l'aide d'une aiguille (de type canule d'injection). Pour cela, l'extrémité de la portion initiale de la fibre 2 est enfilée dans le canal de cette aiguille puis l'aiguille est poussée à travers les membranes supérieure 152 et inférieure. Dans cet exemple, le passage de l'aiguille à travers les membranes crée les fentes dans ces membranes en même temps que la fibre 2 est enfilée à travers ces fentes.

Une fois que la portion initiale de la fibre 2 a été mise en place l'aiguille est retirée. Ensuite, lors d'une étape 202, le four 42 génère en continu des portions successives de la fibre 2 qui sont entraînées verticalement par le cabestan 110 pour qu'elles défilent successivement à travers le support 120 et les postes 44, 46 puis à travers le poste 48.

Lors d'une étape 204, le support 120 limite l'amplitude des vibrations de la fibre pour que l'amplitude de ces vibrations au niveau de la zone 66 d'inscription reste inférieure à D₁₀. Ici, l'amplitude des vibrations de la fibre 2 au niveau de la zone 66 est typiquement inférieure à 1 µm ou 500 nm. Avec le support 120 décrit ici, il a été observé que l'amplitude des vibrations au niveau de la zone 66 est inférieure au diamètre du cœur de la fibre et même cinq ou cent fois inférieure au diamètre du cœur de la fibre. Ainsi, lorsqu'une succession de motifs 22 sont inscrits les uns après les autres dans le cœur 10, l'alignement de ces motifs 22 les uns derrières les autres apparaît comme étant parfaitement parallèle à l'axe longitudinal 6 de la fibre 20 lorsqu'ils sont observés à l'aide d'un microscope optique.

En parallèle de l'étape 204, lors d'une étape 206, le poste 44 inscrit les uns après les autres les motifs 22 dans le cœur 10 de la fibre 2 afin d'obtenir la fibre 20.

Également en parallèle de l'étape 204, lors d'une étape 208, le poste 46 mesure, au niveau de la zone 80, la distance entre les motifs 22 et la limite entre le cœur 10 et la gaine 12, puis transmet ces mesures à l'unité 90 de commande.

Lors d'une étape 210, le module 92 acquière les distances mesurées et les compare aux seuils pré-enregistrés. Si les distances mesurées franchissent l'un de ces seuils, le module 92 commande l'interface homme-machine 94 pour l'indiquer à un être humain.

En sortie des postes 44 et 46, la portion de fibre entre dans le poste 48 de dépôt où, lors d'une étape 212, le revêtement 32 est déposé sur la gaine 12.

Ensuite, la portion de fibre 30 obtenue en sortie du poste 48 est enroulée, lors d'une étape 214, sur la bobine 114.

### Chapitre III : Variantes :

### Variantes du support de stabilisation :

Il n'est pas nécessaire que la zone 66 d'inscription soit située à mi-distance entre les fentes inférieure et supérieure. Par exemple, en variante, la zone d'inscription est plus proche soit de la fente inférieure 152 soit de la fente supérieure.

Dans une autre variante, la position de la membrane supérieure par rapport à la membrane inférieure est réglable en hauteur, c'est-à-dire le long de l'axe 54 de défilement. Par exemple, pour cela, la membrane supérieure est fixée sur un plateau mécaniquement indépendant du boîtier 130. La position de ce plateau est ajustable selon les directions X, Y et Z indépendamment de la position du boîtier 130. La membrane supérieure est fixée sur ce plateau, par exemple, de la même façon que ce qui a déjà été décrit lorsque la membrane supérieure est fixée sur la paroi supérieure 137 du boîtier 130. Éventuellement, pour pallier au fait que la membrane supérieure n'est plus en contact avec le liquide 121, une goutte de liquide de mouillage peut être déposée sur la membrane supérieure à l'emplacement de sa fente de sorte que cette goutte est traversée par la fibre optique lors de son défilement à travers le support 120. Ce liquide de mouillage est, par exemple, identique au liquide 121. En déplaçant le plateau dans la direction Z, il est possible de modifier la hauteur à laquelle se situe la membrane supérieure sans modifier la position de la membrane inférieure. Cela peut être utile pour modifier l'emplacement des nœuds de vibrations de la fibre optique entre les membranes inférieure et supérieure de sorte que la zone 66 d'inscription soit aussi proche que possible d'un nœud de vibrations. Ainsi l'amplitude des vibrations dans la zone 66 est encore plus réduite.

En variante, le support de stabilisation comporte une seule membrane. Par exemple, la membrane supérieure et le mécanisme supérieur de fixation sont omis. Ceci est possible même quand le boîtier 130 contient le liquide 121 car la membrane supérieure n'est pas utilisée pour retenir le liquide 121 dans la cavité 140.

Dans le cas où le boîtier 130 ne contient pas de liquide d'indice, il est possible d'omettre soit la membrane supérieure soit la membrane inférieure 152. Il est alors aussi possible d'omettre les parois latérales 132 à 135 et la paroi supérieure 137. Ainsi, dans ce cas particulièrement simplifié, le support de stabilisation comporte seulement la paroi inférieure 136 et la membrane inférieure 152. La zone d'inscription peut alors être située au-dessus ou au-dessous de cette unique membrane.

Une ou plusieurs des fenêtres latérales 144 à 146 peuvent être omises. Si toutes les fenêtres latérales sont omises, alors la zone 80 d'inspection peut être située en dessous de la membrane 152 et donc en dehors de la cavité 140.

D'autres formes sont possibles pour le boîtier 130. Par exemple, la paroi inclinée 134 peut être remplacée par une paroi verticale. Dans ce cas, si nécessaire, les réflexions du faisceau laser peuvent être limitées en recouvrant la paroi verticale d'un matériau absorbant à la longueur d'onde du faisceau laser. Une autre solution consiste à éloigner beaucoup plus cette paroi verticale de la zone 66 d'inscription, par exemple en l'éloignant deux ou trois fois plus que dans le cas de la paroi 134.

Le boîtier 130 peut aussi avoir une autre forme qu'un cube. Par exemple, il peut avoir la forme d'un cylindre de section circulaire ou autre.

D'autres mécanismes de fixation de la membrane 152 sur la paroi inférieure 136 sont possibles. Par exemple, en variante, la membrane 152 est collée sur la paroi 136 et non pas maintenue par pincement.

### Variantes du poste d'inscription des motifs :

Les motifs 22 ne sont pas nécessairement des bulles mais peuvent être, en variantes, des filaments, des densifications de la silice ou des nanoréseaux (« nanograting » en anglais) ou des centres colorés issus de la recombinaison des liaisons entre le germanium et la silice.

Les motifs 22 ne sont pas nécessairement centrés sur l'axe 6 de la fibre 20. Ils peuvent aussi être désaxés par rapport à l'axe 6 tout en restant dans le cœur 10. Les motifs 22 peuvent aussi être inscrits dans la gaine 12 à proximité du cœur 10.

En variante, les réseaux de Bragg sont des réseaux de Bragg inclinés (« tilted fiber Bragg grating » en anglais) ou des réseaux de Bragg à dérive de fréquence (« chirped fiber Bragg grating » en anglais). Dans le cas des réseaux de Bragg à dérive de fréquence, le pas Λ entre les motifs d'un même réseau de Bragg n'est pas constant mais, au contraire, varie selon une loi prédéfinie.

Le poste d'inscription peut aussi être utilisé pour créer d'autres dispositifs optiques que des réseaux de Bragg dans le cœur de la fibre optique. Par exemple, en variante, les motifs 22 inscrits dans le cœur 10 forment une juxtaposition, le long de l'axe 6, de cavités de Fabry-Perot. Dans une autre variante, à intervalle régulier, par exemple tous les millimètres, un motif 22 est inscrit dans le cœur 10 et cela continûment sur toute la longueur du cœur 10.

Les motifs 22 ne sont pas nécessairement inscrits uniquement dans le cœur 10 mais peuvent aussi, en plus, s'étendre dans la gaine optique 12 ou être seulement inscrit dans la gaine 12.

Lorsque la source laser 60 est suffisamment stable, le stabilisateur 62 du faisceau laser peut être omis.

La platine 72 peut être omise. Dans ce cas, la position de l'objectif 64 par rapport à la tour 40 est fixe.

Le poste d'inscription peut aussi être configuré pour mettre en œuvre d'autres méthodes d'inscription haute résolution que la méthode décrite dans le chapitre II**.** Par exemple, il est possible de remplacer le laser femtoseconde par un laser UV (UltraViolet).

Le poste d'inscription 44 peut aussi être remplacé par un poste d'inscription configuré pour mettre en œuvre une méthode d'inscription basse résolution. En effet, le fait de stabiliser la fibre optique dans la zone 66 d'inscription peut aussi être bénéfique pour les méthodes d'inscriptions basses résolutions. Par exemple, la combinaison du support de stabilisation avec une méthode d'inscription basse résolution permet d'inscrire les motifs préférentiellement dans un seul cœur d'une fibre optique multicœurs. A titre d'illustration d'une telle variante, le poste d'inscription est configuré pour inscrire simultanément plusieurs motifs dans le cœur 10 en mettant en œuvre une méthode connue sous le terme de « technique de balayage de masque de phase » ou « phase mask scanning technique » en anglais. De telles méthodes sont par exemple décrites dans la demande US2007236796A1 ou la demande CN109655962A. Ces méthodes utilisent généralement un masque de phase pour créer une interférence et ainsi projeté simultanément sur le cœur de la fibre optique un ensemble de faisceaux qui forment les motifs du réseau inscrit à partir d'une seule impulsion laser. Dans ce cas, les motifs inscrits dans le cœur de la fibre optique ne sont pas des bulles mais de simples variations d'indices de réfraction. De plus, la taille de ces motifs est généralement bien plus grande que la taille des bulles créées à l'aide d'un laser femtoseconde lors d'une inscription point-à-point. Ainsi, la taille des motifs dans ce cas est généralement supérieure à 1 µm ou 10 µm et souvent égale ou supérieure au diamètre D₁₀ du cœur de la fibre optique. Lorsqu'un masque de phase est utilisé, la source laser n'est pas nécessairement un laser femtoseconde. Par exemple, un laser nanoseconde peut être utilisé. Le poste d'inscription peut aussi être configuré pour mettre en œuvre l'une des autres méthodes d'inscriptions décrites dans la demande US2007236796A1.

Les méthodes d'inscription décrites dans les articles de W. Gao et Al et de H. Guo et Al cités dans l'introduction de cette demande peuvent aussi être mises en œuvre à la place de la méthode d'inscription point-à-point décrite dans le chapitre II.

### Variantes du poste de mesure :

En variante, le poste de mesure comporte plusieurs caméras disposées les unes par rapport aux autres pour mesurer la distance horizontale entre les motifs 22 et la limite entre le cœur 10 et la gaine 12, dans différentes directions.

Le poste de mesure peut mesurer d'autres caractéristiques dimensionnelles à la place ou en plus de la distance entre les motifs inscrits et la limite entre le cœur 10 et la gaine 12. Par exemple, cette ou ces autres caractéristiques dimensionnelles peuvent être choisies dans le groupe constitué des caractéristiques dimensionnelles suivantes :
- la taille des motifs inscrits dans le cœur de la fibre optique, et
- le diamètre de la fibre optique nue générée.

La taille du motif inscrit est le diamètre de ce motif lorsque le motif est une bulle. La taille d'un motif est représentative de l'énergie déposée par la source laser dans le cœur de la fibre optique. Ainsi, la taille mesurée des motifs peut être utilisée pour valider que l'énergie actuelle des impulsions lasers est appropriée. La taille mesurée peut aussi être utilisée pour asservir la taille des motifs sur une consigne préenregistrée de taille. Dans ce cas, l'écart entre la taille mesurée et la consigne de taille est utilisé pour modifier automatiquement la puissance de la source laser afin de diminuer cet écart.

Il est aussi possible de réaliser la mesure d'une caractéristique dimensionnelle de la fibre 2 ou de la fibre 20 à travers l'objectif 64. Dans ce cas, la zone 80 d'inspection est confondue avec la zone 66 d'inscription.

La zone 80 d'inspection peut aussi être située sous la fente 154 à une distance inférieure à Dmax de cette fente 154.

La tour de fibrage peut aussi comporter plusieurs postes de mesure distincts. Dans ce cas, la tour de fibrage comporte plusieurs zones d'inspection distinctes. Par exemple, l'une de ces zones d'inspection est située à l'intérieur de la cavité 140 tandis qu'une autre zone d'inspection est située en dessous de la membrane 152. De préférence, ces postes de mesure distincts mesurent des caractéristiques dimensionnelles différentes de la fibre.

Dans une variante simplifiée, le poste 46 de mesure est omis.

Des postes de mesure supplémentaires peuvent être prévus. Par exemple, la tour de fibrage peut aussi comporter un poste de mesure du diamètre de la fibre optique revêtue.

### Autres variantes :

D'autres modes de réalisation de la fibre 2 sont possibles. Par exemple, le cœur 10 peut être réalisé en silice pure et la gaine optique 12 est de la silice dopée avec du fluor. Le cœur 10 peut aussi être réalisé dans d'autres matériaux capables de guider le signal optique comme, par exemple, en aluminosilicates dopés aux terres rares, en saphir ou en polymère organique. Dans ces derniers cas, la gaine optique 12 n'est pas nécessairement réalisée dans le même matériau que le cœur 10.

La fibre 2 peut être une fibre optique multimode ou MMF (Multi-Mode Fiber).

Les dimensions de la fibre 2 peuvent être différentes. En général, le diamètre D₁₂ la gaine 12 est compris entre 50 µm et 500 µm. Le diamètre D₁₀ du cœur 10 est quant à lui généralement compris entre 4 µm et 100 µm.

La fibre optique peut aussi comporter plusieurs cœurs entourés par la même gaine et par le même revêtement de protection.

Les modes de réalisation du poste 48 de dépôt du revêtement 32 dépendent de la nature chimique du revêtement 32 déposé. Par exemple, si le revêtement 32 est un acrylate, alors l'applicateur 102 est un système de filières pour l'injection sur la fibre 20 du monomère sous pression et thermostaté et le dispositif 104 est une lampe UV (UltraViolet) pour assurer la polymérisation. Si le revêtement 32 est réalisé en polyimide, le dispositif 104 est un four thermique pour la polymérisation. Si le revêtement 32 est un revêtement dit d'attente, l'applicateur 102 est un simple godet et le dispositif 104 est un four pour réaliser un recuit thermique. Toujours selon la nature chimique du matériau utilisé pour réaliser le revêtement 32, ce matériau peut être injecté sous pression ou, au contraire, déposer sous pression atmosphérique, par l'applicateur 102. Dans le cas où le revêtement 32 est métallique, ce poste 48 est identique à celui décrit dans la demande US2016025925A1. Si le revêtement 32 est en céramique, le poste 48 peut être réalisé comme décrit dans la demande FR3137911A1. Le poste 48 de dépôt peut aussi être configuré pour déposer un revêtement multicouche comportant plusieurs couches déposées directement les unes sur les autres.

La tour de fibrage peut comporter d'autres postes de fabrications que ceux représentés sur la figure 4. Par exemple, la tour 4 comporte un poste connu sous le terme de « descente de préforme ». C'est le rapport entre la vitesse de cette descente de préforme et celle du dispositif d'étirement qui fixe le rapport entre le diamètre de la fibre 2 et celui de la préforme 52.

D'autres modes de réalisation du dispositif 50 d'entraînement sont possibles. Par exemple, le cabestan 110 est omis. Dans ce dernier cas, c'est l'enrouleur 112 qui entraîne la bobine 114 en rotation pour à la fois étirer la fibre optique et l'enrouler sur cette bobine.

D'autres modes de réalisation de l'unité 90 de commande sont possibles. Par exemple, en variante, l'unité 90 commande la platine 72 pour réduire un écart entre la position des motifs 22 mesurées par le poste 46 et une consigne pré-enregistrée de position.

La platine 122 peut être omise. Dans ce cas, le support 120 de stabilisation est fixé, sans aucun degré de liberté, sur le tour de fibrage.

Dans une variante simplifiée, le support de stabilisation est uniquement utilisé pour stabiliser la fibre optique nue à l'intérieur de la zone 80 d'inspection et non pas à l'intérieur de la zone 66 d'inscription. Dans ce cas, la distance entre la fente 152 et la zone 66 d'inscription peut être supérieure à la distance Dmax. Cette variante est par exemple mise en œuvre lorsque la méthode d'inscription est une méthode d'inscription basse résolution qui ne nécessite pas de stabiliser la fibre optique. Cette variante peut aussi être mise en œuvre dans une tour de fibrage dépourvue de poste d'inscription.

Plusieurs des variantes décrites ci-dessus peuvent être combinées dans un même mode de réalisation.

### Chapitre IV : Avantages des modes de réalisation décrits :

Le fait d'utiliser une membrane comportant une fente dont les bords frottent sur la fibre optique nue à la sortie du four d'étirage permet de limiter l'amplitude des vibrations de la fibre optique nue à cet emplacement. Cette limitation de l'amplitude des vibrations de la fibre optique nue, rend possible l'utilisation, à proximité de cet emplacement, de méthodes d'inscription hautes résolutions dans lesquelles les dimensions de la zone d'inscription sont étroites, c'est-à-dire typiquement inférieure au diamètre du cœur de la fibre optique nue. Ainsi ces méthodes d'inscription hautes résolutions peuvent elles aussi bénéficier des avantages procurés par le fait que le poste 44 d'inscription est situé avant le poste 48 de dépôt du revêtement de protection. Par exemple, comme décrit dans le chapitre II, cela permet la mise en œuvre, juste en sortie du four 42 d'étirage, de méthodes d'inscription point-à-point de motifs dans le cœur de la fibre optique nue.

Il est souligné que dans l'état de l'art, il est admis que la fibre optique nue ne doit pas entrer en contact avec un élément avant que son revêtement de protection soit déposé. En effet, il est connu qu'un tel contact risque d'endommager la surface externe de la fibre optique nue et donc de dégrader sa résistance à la rupture. Dans le cas présent, il a effectivement été observé que le frottement des bords 156, 158 de la fente 154 sur la fibre optique nue diminue la résistance à la rupture de la fibre optique par rapport à une fibre optique identique fabriquée de manière conventionnelle. Une telle diminution de la résistance à la rupture est généralement inacceptable pour des fibres optiques destinées à être utilisées dans le domaine des télécommunications. Par contre, malgré cette diminution de la résistance à la rupture, la résistance à la rupture des fibres optiques obtenues reste tout à fait acceptable pour des fibres fonctionnalisées utilisées dans le domaine de la métrologie. En effet, dans le domaine de la métrologie, les longueurs des fibres optiques fonctionnalisées sont très inférieures aux longueurs des fibres optiques utilisées dans le domaine des télécommunications et les sollicitations mécaniques auxquelles elles sont soumises sont très inférieures. Ainsi, dans le domaine de la métrologie, la baisse de la résistance à la rupture observée reste acceptable.

Lorsque la membrane 152 obture le trou inférieur 150 du boîtier 130 qui contient le liquide d'indice, la même membrane 152 permet alors à la fois de stabiliser la fibre optique et de retenir le liquide d'indice à l'intérieur du boîtier. Cela simplifie la réalisation de la tour de fibrage dans le cas où un liquide d'indice est utilisé pour limiter les déformations du faisceau laser à l'interface de la gaine optique 12.

L'utilisation du laser femtoseconde 60 combiné avec l'objectif 64 reçu dans l'ouverture latérale 142 du boîtier 130 et du liquide d'indice 121 permet de mettre en œuvre la méthode d'inscription point-à-point de motifs 22 dans la fibre optique avant le dépôt du revêtement de protection. De plus, dans ce cas, la nature du revêtement de protection peut être quelconque et, en particulier, le revêtement de protection peut être opaque aux impulsions du laser femtoseconde.

Le fait d'utiliser à la fois des membranes inférieure et supérieure situées de part et d'autre de la zone 66 d'inscription, permet de limiter encore plus l'amplitude des vibrations de la fibre optique au niveau de la zone d'inscription.

La platine 122 de déplacement du support 120 permet de centrer avec précision la fente 154 sur l'axe 54 de défilement et donc d'équilibrer au mieux les forces de frottement exercées par chacun des bords 156, 158 de la fente 154 sur la fibre optique. Cela permet de limiter la dégradation de la résistance à la rupture de la fibre optique par rapport au cas où la fente 154 serait décalée horizontalement de plus de 100 µm par rapport à l'axe 54 de défilement.

Le fait que la distance entre la fente 154 du support 120 et la zone 80 d'inspection soit inférieure à Dmax, permet, à l'aide du même support 120, de stabiliser la fibre optique nue à la fois dans la zone 66 d'inscription et dans la zone 80 d'inspection.

Le fait que la zone 66 d'inscription soit située à moins de 5 cm de la fente 154 permet de limiter l'encombrement du support 120.

Le fait que l'épaisseur de chaque membrane est comprise entre 0,5 mm et 3 mm permet de limiter la dégradation de la résistance à la rupture de la fibre optique fabriquée.

Le fait que la longueur de la fente 154 soit supérieure à 0,5 mm et inférieure au diamètre du trou 150 permet de limiter encore plus la dégradation de la résistance à la rupture de la fibre optique fabriquée.

Le fait que le diamètre du trou 150 soit compris entre 1 mm et 5 mm permet de limiter la déformation de la membrane 152 sous l'action du poids du liquide d'indice et donc de limiter encore plus la dégradation de la résistance à la rupture de la fibre optique fabriquée.

## Revendications

1. Tour de fibrage pour la fabrication d'une fibre optique fonctionnalisée, cette tour de fibrage comportant successivement en allant du haut vers le bas :
- un four (42) d'étirage apte à générer, à partir d'une préforme, une fibre optique nue, cette fibre optique nue générée comportant au moins un cœur (10) et une gaine (12) conformés pour guider un signal optique,
- un poste (44) d'inscription de motifs dans la fibre optique nue à l'aide d'un faisceau laser, ce poste d'inscription comportant une source laser (60) apte à émettre le faisceau laser et un objectif (64) apte à diriger le faisceau laser émis sur une zone (66) d'inscription traversée par la fibre optique nue générée,
- un poste (48) de dépôt d'un revêtement de protection sur la gaine de la fibre optique nue générée,
- un dispositif (50) d'entraînement apte à faire défiler verticalement la fibre optique nue générée le long d'un axe (54) de défilement vertical qui passe successivement à travers la zone d'inscription du poste d'inscription puis à travers le poste de dépôt,
**caractérisé en ce que** :
- la tour de fibrage comporte un support (120) de stabilisation apte à limiter l'amplitude des vibrations de la fibre optique nue générée, ce support comportant à cet effet une membrane (152) dont la dureté, sur l'échelle A de Shore, est comprise entre 5 et 60,
- la membrane comporte une fente (154) traversée par l'axe (54) de défilement, cette fente comportant des bords (156, 158) aptes à frotter contre la fibre optique nue lorsque cette fibre optique nue défile à l'intérieur du poste d'inscription, et
- la distance verticale entre la fente (154) et la zone (66) d'inscription est inférieure à une distance Dmax au-delà de laquelle l'amplitude des vibrations de la fibre optique nue devient supérieure au diamètre du cœur de cette fibre optique nue.

2. Tour selon la revendication 1, dans laquelle :
- le support de stabilisation comporte un boîtier (130) comportant des parois latérales (132-135) et une paroi inférieure (136), ces parois délimitant une cavité (140) à l'intérieur de laquelle est située la zone d'inscription, la paroi inférieure comportant un trou inférieur (150) traversé par l'axe de défilement et l'une des parois latérales comportant une ouverture latérale (142) pour introduire, à l'intérieur de la cavité, le faisceau laser dirigé sur la zone d'inscription, et
- la tour de fibrage comporte un liquide (121) d'indice qui remplit la cavité du boîtier de sorte que la zone d'inscription est située à l'intérieur du liquide d'indice, ce liquide d'indice étant transparent au faisceau laser et son indice de réfraction étant compris entre 0,88*r₁₂ et 1,1*r₁₂, où r₁₂ est l'indice de réfraction de la gaine de la fibre optique nue, et
- la membrane (152) est fixée, sans aucun degré de liberté, sur la paroi inférieure et obture le trou inférieur pour retenir le liquide d'indice à l'intérieur de la cavité tout en étant traversé par la fibre optique nue.

3. Tour selon la revendication 2, dans laquelle :
- la source laser (60) est un laser femtoseconde apte à émettre des impulsions laser, et
- l'objectif (64) est configuré pour focaliser chaque impulsion laser sur la zone d'inscription pour générer, les uns après les autres, des motifs dans la fibre optique qui défile à travers cette zone d'inscription.

4. Tour selon l'une quelconque des revendications précédentes, dans laquelle :
- la membrane (152) forme une membrane inférieure et le support de stabilisation comporte en plus une membrane supérieure, les membranes inférieure et supérieure étant situées de part et d'autre de la zone d'inscription,
- la dureté de la membrane supérieure, sur l'échelle A de Shore, est comprise entre 5 et 60, et la membrane supérieure comporte une fente supérieure traversée par l'axe de défilement, cette fente supérieure comportant des bords aptes à frotter contre la fibre optique nue lorsque cette fibre optique nue défile à l'intérieur de cette fente supérieure, et
- la distance verticale entre la fente supérieure et la zone (66) d'inscription est inférieure à la distance Dmax.

5. Tour selon l'une quelconque des revendications précédentes, dans laquelle la tour de fibrage comporte une platine (122) apte à déplacer, avec une précision inférieure à 100 µm, le support (120) de stabilisation dans deux directions orthogonales et perpendiculaires à l'axe de défilement.

6. Tour selon l'une quelconque des revendications précédentes, dans laquelle :
- la tour de fibrage comporte un poste (46) de mesure d'une caractéristique dimensionnelle d'une portion de la fibre optique nue située à l'intérieur d'une zone (80) d'inspection, ce poste de mesure étant situé entre le four d'étirage et le poste de dépôt, et
- la distance verticale entre la fente (152) et la zone (80) d'inspection est inférieure à la distance Dmax.

7. Tour selon l'une quelconque des revendications précédentes, dans laquelle la distance verticale entre la fente (152) et la zone (66) d'inscription est comprise entre 0,5 cm et 5 cm.

8. Support de stabilisation pour la réalisation d'une tour de fibrage conforme à l'une quelconque des revendications précédentes, ce support étant apte à limiter l'amplitude des vibrations de la fibre optique nue et comportant à cet effet :
- une paroi inférieure (136) comportant un trou inférieur (150) centré sur un axe de défilement, et
- une membrane inférieure (152) fixée, sans aucun degré de liberté, sur la paroi inférieure et obturant le trou inférieur,
**caractérisé en ce que** :
- la dureté de la membrane inférieure (152), sur l'échelle A de Shore, est comprise entre 5 et 60, et
- la membrane inférieure comporte une fente (154) inférieure traversée par l'axe de défilement, cette fente inférieure comportant des bords (156, 158) aptes à frotter contre la fibre optique nue lorsque cette fibre optique nue défile à l'intérieur de cette fente.

9. Support selon la revendication 8, dans lequel :
- le support de stabilisation comporte un boîtier (130) comportant des parois latérales (132-135) et la paroi inférieure (136), ces parois délimitant une cavité (140) apte à être remplie par le liquide d'indice à l'intérieur duquel est située la zone d'inscription, et
- l'une des parois latérales du boîtier comporte une ouverture latérale (142) pour introduire, à l'intérieur de la cavité, le faisceau laser dirigé sur la zone d'inscription.

10. Support selon la revendication 9, dans lequel :
- le boîtier comporte une paroi supérieure (137) située du côté opposé à la paroi inférieure, cette paroi supérieure comportant un trou supérieur centré sur l'axe de défilement, et
- le support de stabilisation comporte une membrane supérieure fixée, sans aucun degré de liberté, sur la paroi supérieure et obturant le trou supérieur, la dureté de la membrane supérieure, sur l'échelle A de Shore, étant comprise entre 5 et 60, et
- la membrane supérieure comporte une fente supérieure traversée par l'axe de défilement, cette fente supérieure comportant des bords aptes à frotter contre la fibre optique nue lorsque cette fibre optique nue défile à l'intérieur de cette fente supérieure.

11. Support selon l'une quelconque des revendications 8 à 10, dans lequel l'épaisseur de chaque membrane est comprise entre 0,5 mm et 3 mm.

12. Support selon l'une quelconque des revendications 8 à 11, dans lequel le diamètre du trou inférieur est compris entre 1 mm et 5 mm et la longueur de la fente est supérieure à 0,5 mm et inférieur au diamètre du trou inférieur.

13. Support selon l'une quelconque des revendications 8 à 12, dans lequel, chaque paroi (136, 137), sur laquelle est fixée une membrane, comporte un jeu de deux mâchoires (162, 164) déplaçables l'une par rapport à l'autre de façon réversible entre :
- un état pincé dans lequel les mâchoires pincent la périphérie de la membrane (152) pour la fixer sur la paroi, et
- un état relâché dans lequel les mâchoires autorisent le remplacement de la membrane par une nouvelle membrane.

14. Procédé de fabrication d'une fibre optique fonctionnalisée à l'aide d'une tour de fibrage conforme à l'une quelconque des revendications 1 à 7, ce procédé comportant successivement les étapes suivantes :
- la génération (202), à l'aide d'un four d'étirage et à partir d'une préforme, d'une fibre optique nue, cette fibre optique nue générée comportant un cœur et une gaine conformés pour guider un signal optique, puis
- l'inscription (206) de motifs dans la fibre optique nue à l'aide d'un faisceau laser et d'un poste d'inscription comportant une source laser apte à émettre le faisceau laser et un objectif apte à diriger le faisceau laser émis sur une zone d'inscription traversée par la fibre optique nue générée, puis
- le dépôt (212), à l'aide d'un poste de dépôt, d'un revêtement de protection sur la gaine de la fibre optique nue générée, et
- le défilement vertical (202), à l'aide d'un dispositif d'entraînement, de la fibre optique nue générée le long d'un axe de défilement vertical qui passe successivement à travers la zone d'inscription du poste d'inscription puis à travers le poste de dépôt,
**caractérisé en ce que**, en parallèle de l'inscription de motifs, le procédé comporte la limitation (204), à l'aide d'un support de stabilisation conforme à l'une quelconque des revendications 8 à 13, de l'amplitude des vibrations de la fibre optique nue générée.
